Europäisches Patentamt

European Patent Office

Office européen des brevets

(11) Publication number: **0 113 556**
**B1**

# EUROPEAN PATENT SPECIFICATION

(45) Date of publication of patent specification: **07.03.90**

(51) Int. Cl.⁵: **G 06 K 9/60**

(21) Application number: **83307498.2**

(22) Date of filing: **08.12.83**

(54) Apparatus and method for pattern location.

(30) Priority: **08.12.82 US 447867**
**08.12.82 US 447868**

(43) Date of publication of application:
**18.07.84 Bulletin 84/29**

(45) Publication of the grant of the patent:
**07.03.90 Bulletin 90/10**

(84) Designated Contracting States:
**DE FR GB IT**

(56) References cited:
**GB-A-1 127 361**
**US-A-3 749 830**
**US-A-3 970 841**
**US-A-4 091 394**
**US-A-4 153 897**
**US-A-4 200 861**

(73) Proprietor: **TEXAS INSTRUMENTS**
**INCORPORATED**
**13500 North Central Expressway**
**Dallas Texas 75265 (US)**

(72) Inventor: **Clunn, Robert H.**
**800 Custer Road**
**Richardson, Texas (US)**

(74) Representative: **Abbott, David John et al**
**Abel & Imray Northumberland House 303-306**
**High Holborn**
**London, WC1V 7LH (GB)**

Courier Press, Leamington Spa, England.

## Description

### Background of the invention
### Field of the invention

The invention relates to the location of patterns within an image, and more particularly, the invention relates to the location of patterns by utilizing an apparatus and method adapted to vary the size of the area searched for the pattern.

### Description of the prior art.

Pattern location systems for locating predetermined patterns within an image are known in the art. A type of location system is shown in U.S. Patent No. 3,776,447 issued to Adams et al on December 4, 1973, and entitled "Automatic Semiconductor Bonding Machine". In Adams, an object is located and that information is utilized to position a tool for operation on the object. The object in Adams is a semiconductor integrated circuit, and the tool is the bonding head of wire bonder.

In general, a pattern location system determines the location of a pattern within a image by comparing portions of the image with a reference pattern. The image is observed by a video camera. The video camera is positioned to be incident to light reflected from the object. The camera scans the light it receives and produces an analog output which corresponds to the image of the object present in the reflected light. Typically the video camera produces a raster scan of the light reflected from the object. The analog output produced by the video camera has an amplitude varying in proportion to the magnitude of the reflected light at the corresponding location within the image. The light reflected from the object is repeatedly electronically scanned by the video camera.

The analog output of the video camera is digitized and the digital output produced is usually stored in a memory. When the analog output is digitized, a certain amplitude is selected. The analog output is sampled at a known rate. If the amplitude of the analog output when sampled exceeds the certain amplitude, a digital signal of one level is generated. If the amplitude of the analog output when sampled is less than or equal to the certain amplitude, a digital signal of another level is generated. As the digital signals are generated they form a digital output which is stored into a video memory. The storage of the digital output is such that the relationship between the individual digital and the corresponding location of the digital signal within the image is known and maintained.

The digital image within the video memory is compared with a stored reference image. The comparison is usually repeated as the image within the video memory is shifted relative to the reference image. The best match between the reference image, which is the predetermined pattern, is found by the repeated comparisons. The location of the pattern within the video image is noted and the information transferred to an alignment apparatus. The align apparatus is then actuated and the position of the object relative to a tool is altered. An X-Y table can be utilized for this purpose. The motors attached to the table can be actuated and the relative position of the object and tool altered. The motors are usually driven by a displacement device which utilizes the location of the pattern within the stored image to determine the distance and direction of the relative movement necessary to bring the predetermined pattern on the object to a desired position relative to the tool.

In US—A—4200861 there is described a pattern recognition apparatus in which video information is digitised by comparing the video signal level with an adjustable threshold level obtained by integrating the video signal level. Use of coarse information initially provides a rough indication of the location of a match, and then fine information from around that location is used to locate the best possible match.

It is an object of the invention to ascertain the location of a predetermined pattern in a succession of images.

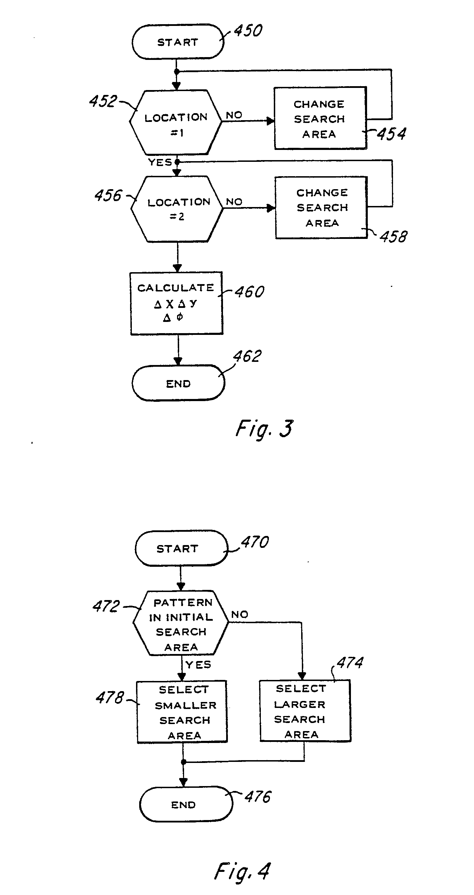

According to the present invention there is provided apparatus for moving a tool relative to a workpiece to each of an array of datum positions in turn by executing a nominal movement from one datum position to the next, in which the workpiece has on its surface repetitions of a particular pattern at places corresponding to the array of datum positions, and the apparatus includes alignment means having means for producing an image of the part of the surface within a field of view relative to the tool, means for comparing a selected part of that image with a reference image representing the particular pattern, search means for shifting the selected part of the image over the field of view to obtain the best match between the selected image part and the reference image, and adjusting means responsive to the search means to bring the tool accurately to a required position on the workpiece, characterised in that the search means is arranged to shift the selected part of the image over a preselected search area of the field of view, the size of the preselected search area being increased if a previous search was unsuccessful in finding a satisfactory match between the selected image part and the reference image, and the size of the preselected search area being reduced if a previous search was successful in finding a satisfactory match (Figure 4).

The apparatus disclosed herein includes a video camera producing an analog output of a scan, which can be a raster scan, of the light incident thereto. The video camera is located along an optical path incident to light reflected from the surface of an object. The surface of the object has several features including a predetermined pattern. It is this predetermined pattern which the apparatus is adapted to locate. As the incident light reflected from the surface of the object is received by the video camera, the camera produces an analog output having an amplitude varying proportionally to the magnitude of the light within the image of the surface at the location within the image corresponding to that section of the analog output. In other words, as the video camera scans the incident light reflected from the object, the analog output produced by the video camera varies in proportion to the magnitude of the light observed by the camera as the image within the incident light is scanned. The analog output of the video camera is connected to the digitizer circuit which converts the analog output to a digital output comprising one of two levels. The analog output is compared to a threshold signal to determine which of the two digitial levels the magnitude of the analog output represents.

The analog output is also connected to an integrator circuit which produces an output which represents the integral of the magnitude of the analog output of the video camera over time. The integrator can be connected to integrate only a selected portion of the scanned image (called hereinafter a window). The integrated output of the integrator is normalized by performing an analog division (or fractional multiplying operation) which adjusts the integrated output according to the size of the window. The larger the window the larger the divisor to produce a normalized output which is indepenent of the size of the window. The integrated and normalized output can be connected through a manually adjustable potentiometer to the input of an analog sample and hold circuit. The sample and hold circuit can be actuated after each scan to output the updated value of the integrated and normalized output. The output of the sample and hold is the threshold signal. That is the integrated and normalized output is latched into the sample and hold circuit to become its output.

The threshold signal produced by the sample and hold circuit is connected to one input of a comparitor. The other input of the comparitor is connected to the analog output of the video camera. The comparitor produces one digital level when the analog output of the video camera has a preselected relationship with the threshold signal and another digital level when the analog ouput of the video camera does not have the preselected relationship with the threshold signal. The preselected relationship can be, for example, the difference in magnitude between the analog output and the threshold signal. When the difference in magnitude is equal to or exceeds a certain value, the comparitor produces one digital level, and when the difference in magnitude is less than the certain value, the other digital level is produced.

The output of the comparitor is connected to a video synchronization circuit. The synchronization circuit samples the output of the comparitor at a known rate (and in regard to the vertical and horizontal synchronization signals). The serial output of the sampling is loaded into a shift register for conversion to a parallel word format. The parallel words are transferred to and stored into a video memory. The method and arrangement of storage is under computer control to ensure that a proper relationship between the storage locations of the parallel words and the image of the surface of the object within the reflected light is maintained. In other words the relationship of each bit of the parallel words and the locations represented by each bit within the image is known.

A reference representation of the predetermined pattern is contained in a reference memory. The reference representation can, for example, be loaded into the reference memory from the video memory by direction of an operator during a setup procedure. In fact the operator can select the predetermined pattern. Once the predetermined pattern is selected and stored, the apparatus of the present invention can locate the predetermined pattern on the surfaces of a plurality of objects which are sequentially presented to the view of the video camera.

The video memory and the reference memory are connected to a correlator. The correlator compares the reference pattern with the video representation stored in the video memory. The video representation is shifted by the correlator to determine the best match between the video representation and the reference pattern. The best match can be determined by finding the location within the video representation which has the fewest mismatches with the reference pattern. Once the best match is determined the location is stored and the predetermined pattern again located within the video representation utilizing a refined procedure if desired. The refined procedure makes use of the location of the pattern determined in the prior procedure. The relative shifting of the reference pattern and the video representation is less for each attempted match. Prior to performing the refined procedure the computer determines if the accumulated mismatches for the best match is sufficiently small that it representations the results of an actual location of the predetermined pattern on the object.

The window discussed above is set by the computer. If the predetermined pattern is within the window, the computer can reduce the area of the window to another preselected size for the next object. If the predetermined pattern is not within the window, then the computer can enlarge the size of the area of the window. Then a new correlation procedure is attempted. This enlarged window size is also used in the correlation procedure for the new object.

The apparatus of the present invention can be utilized to locate more than one predetermined pattern on the surface of an object. The first pattern is located and its location is stored within the computer. The second pattern is located, utilizing a different window, and its location is stored within the computer. The computer then determines the differences between the actual location of the patterns and stored reference locations. This allows the computer to calculate the displacement in the X and Y directions and the angular displacement. The displacements are than supplied to a displacement control for a X—Y table which supplies relative movement between the object and a tool. If it is not necessary to have the angular displacement then the location apparatus need only locate one predetermined pattern and supply the displacement control with the displacement in the X and Y directions resulting from the location of only that one predetermined pattern. The computer can act as the displacement control if desired.

It is an advantage of the present invention to provide an adaptive threshold circuit within a pattern location apparatus.

It is another advantage of the present invention to provide an adaptive threshold circuit which is adapted to determine a proper threshold for comparison to a video analog output during a single scan of a video camera.

A further advantage of the present invention is to provide an adaptive threshold circuit which is capable of determing a proper threshold signal for comparison to an analog output from a video camera by integrating a single scan of the analog output.

Another advantage of the present invention is to provide a window of a size selected from a plurality of areas of storing the digitized output of the video camera representing the area within the window of the image presented to the camera.

An additional advantage of the present invention is to provide a predetermined pattern location apparatus which can locate predetermined patterns of different sizes by storing a reference representation of the predetermined pattern having different sizes as selected.

Brief description of the drawings

Figure 1 is a detaled block diagram of an adaptive threshold circuit;

Figure 2 is a block diagram of a system for pattern location;

Figure 3 is a logic diagram of a portion of the operation of the system of Figure 2; and

Figure 4 is a logic diagram of a portion of the operation of the system of Figure 2.

Description of the preferred embodiment

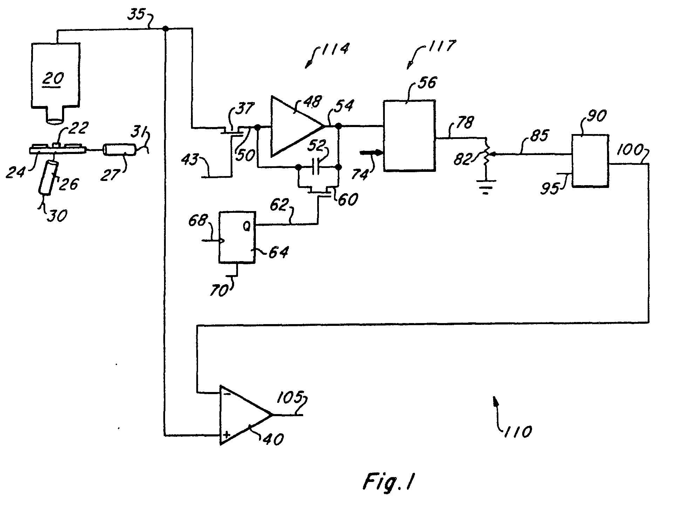

With reference to the drawings and in particular to Figure 1 thereof, a video camera 20 is focused to observe an object 22 which can be, for example, a semiconductor integrated circuit. The object 22 is positioned on a X—Y table 24 which is movable by motors 26 and 27. Motors 26 and 27 are connected through lines 30 and 31, respectively, to a displacement control which supplies the necessary positioning signals to motors 26 and 27 through lines 30 and 31, respectively. Associated with table 24 is a tool (not shown in Figure 1). Table 24 provides relative movement between the tool and object 22. The purpose of the system shown herein is to locate a predetermined pattern on object 22 to determine any positioning error between the actual position of object 22 relative to the tool and a desired relative position.

An example of a tool and various displacement controls are shown in U.S. Patent No. 3,776,447 issued on December 4, 1973, to Adams et al and entitled "Automatic Semiconductor Bonding Machine", U.S. Patent No. 4,352,125 issued on September 28, 1982, to Guth and entitled "Recognition Apparatus", and U.S. Patent No. 3,539,256 issued on November 10, 1970, to Ables and entitled "Step and Repeat Camera with Computer Controlled Film Table", which are incorporated by reference herein.

Camera 20 can be of the raster scanning type and produces an analog output of the light reflected from object 22 during each scan of the plurality of optical scans. As camera 20 scans object 22, the magnitude of the analog output produced is proportional to the light received from the point on object 22 currently being scanned. Thus an image of object 22 which is comprised of the light reflected from object (and as shown in Figure 1 the upper surface thereof) is converted to analog output of varying amplitude. The analog output of camera 20 is connected through line 35 as an input to a semiconductor switch 37 and a comparitor 40. Switch 37 is closed by a signal on line 43. When switch 37 is closed, the analog output of camera 20 is connected as an input to operational amplifier 48 through line 50. Line 50 is also connected to one side of a capacitor 52. The output of operation amplifier 48 is connected through line 54 to the input of an analog multiplier 56 (which is a multiplexing DAC) and to the side of capacitor 52 away from its connection to line 50. A semiconductor switch 60 is connected across the sides of capacitor 52. When switch 60 is closed by a signal on line 62 from the Q input of flip-flop 64, capactor is effectively shorted and the stored charge on the capacitor 54 is discharged through switch 60. This occurs when a new scan is commenced and is initiated by the placement of appropriate signals on lines 68 and 70. The desired result is that switch 60 is closed while the vertical scan signal to camera 20 is being reset to initiate a new scan for a sufficient period to discharge capacitor 52.

Analog multiplier 56 also receives inputs through multiline channel 74. The analog input from operational amplifier 48 connected through line 54 to analog multiplier 56 is multiplied by an amount determined by the digital inputs to analog multiplier 56 through channel 74. The output of analog multiplier 56 is connected through line 78 to one end of a potentiometer 82, which has its other opposite end connected to ground. The contact of potentiometer 82 is connected through line 85 to the input of a sample and hold circuit 90. Sample and hold circuit 90 also receives an input from line 95. The output of sample and hold circuit is connected through line 100 to the negative input of comparitor 40 with line 35 from camera 20 connected to the positive input of comparitor 40. The output of comparitor 40 is connected to line 105.

In operation, the adaptive threshold circuit 110 of Figure 1 receives the analog output of camera 20. Switch 37 is closed to allow selected portions of the analog output of camera 20 to be received as inputs by amplifier 48. The selected portions correspond to a cross-sectional area of the image reflected from the object 22. In other words, only the analog output from camera 20 corresponding to a selected portion of the surface of object 22 is connected to the input of amplifier 48 under the control of switch 37. The selected area could if desired comprise the entire surface of object 22 or any lesser part thereof. Operational amplifier 48 and capacitor comprise integrator 114. The output of operational amplifier 48 after a scan of object 22 is a representation of the entire amount of light reflected from the selected area within the window controlled by switch 37 as received by camera 20. The analog multiplier 56 acts to reduce the amplitude of the signal received from amplifier 48. The fractional value supplied on channel 74 is determined by the size of the window. The analog multiiplier 56 comprises a normalizer 117. Thus, amplifier 48 produces an integrated signal and multiplier 56 produces a normalized signal.

The normalized output of multiplier 56 provides an updated value with which the analog output of the camera 20 can be compared. Potentiometer 82 provides a manual adjust for the threshold signal if desired. After the scan is completed, the output of potentiometer 82 is stored into sample and hold circuit 90 for use during the next scan. After the output of potentiometer 82 is stored into sample and hold circuit 90 switch 60 can be closed to reset the integrator 114 for the next scan. Thus, an adaptive threshold circuit is provided which allows an updated threshold level to be available to comparitor 40 after each scan which allows rapid adjustments to changes in the light level and to differences in the amount of light reflected from different objects which replace object 22 but are substantially identical therewith.

The output of comparitor 40 is one of two digital levels. The digital level selected is determined by a preselected relationship between the analog output of camera 20 and the threshold signal from sample and hold circuit 90. For example, comparitor 40 can produce a high signal when the magnitude of the analog output of camera 20 is equal to or exceeds the magnitude of the threshold signal from sample and hold circuit 90. Comparitor 40 can then produce a low signal when the magnitude of the analog output of camera 20 is less than the magnitude of the threshold signal of sample and hold circuit 90.

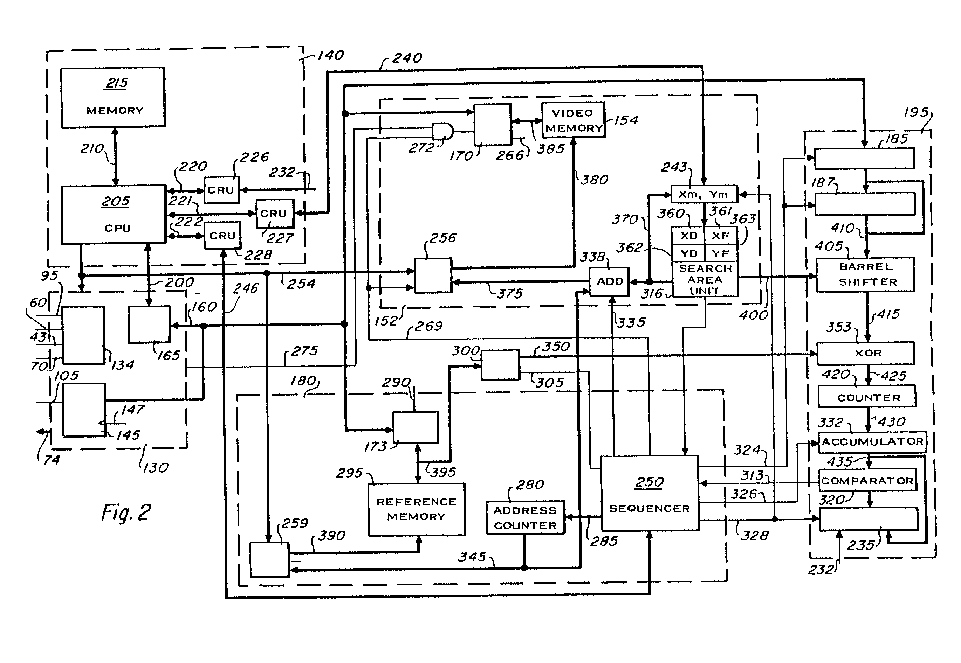

As shown in Figure 2, a video synchronization circuit 130 has as outputs lines 43, 68, 70 and 95, and channel 74. A plurality of flip-flops 134 is provided within circuit 130 to allow the proper signals to be set thereinto as determined by the logic within circuit 130 as directed by computer 140. The necessary logic within circuit 130 can be standard controller logic with appropriate counters and storage elements or a microcontroller. Channel 74 is also connected to a plurality of flip-flops or a register within circuit 130. However, the appropriate sequencing and/or nature of the outputs of circuit 130 to lines 43, 68, 70, and 95, and channel 74 has been discussed above in connection with Figure 1. Line 105 from the output of comparitor 40 (Figure 1) is connected to the input of shift register 145. An appropriate clock signal is provided on line 147 to insure that each line of the scan is divided into the proper number of digital signals. The digital signals are clocked into the shift register 145 (which is a 74LS347) until it is full and then the contents of the shift register 145 is transferred into the video memory circuit 152 for storage into the video memory 154 as a digital representation of the image observed by camera 20 (Figure 1). The output of shift register 145 is connected to a multiline channel 160. Channel 160 is also connected to a bidirectional tri-state buffer 165 (which is a 74LS245). It should be noted that certain components have a specific commercial designator associated therewith. The purpose is to provide the reader with additional information as to the nature of the components where appropriate. Channel 160 is connected to bidirectional tri-stage buffer 170 within video memory circuit 152 and to bidirectional tri-state buffer 173 within reference memory circuit 180. Channel 160 is also connected to registers 185 and 187 located within correlagor 195. The buffer 165 is also connected to multiline channel 200 on its side away from its connection to channel 160. Channel 200 is also connected to CPU (central processing unit) 205 within computer 140.

CPU 205 is connected through multiline channel 210 to memory 215 in computer 140. Memory 215 contains the direct data and program storage for the computer 140.

The computer 140 can be, for example, a 990/101 as manufactured by Texas Instruments, Incorporated. The computer is connected through multiline channels 220, 221, and 222 to CRUs (communication register units) 226, 227, and 228, respectively. Other CRUs can be provided as necessary, for example, to communicate with the displacement circuit discussed above. The side of CRU 226 away from its connection to CPU 205 is connected through multiline channel 232 to register 235 within correlator 195. CRU 227 is connected through multiline channel 240 to register 243 within video memory circuit 152. CRU 228 is connected through multiline channel 246 to sequencer 250 within reference memory circuit 180.

The CPU 205 has its data external data lines connected to channel 200. The address lines of CPU 205 are connected to multiline channel 254. Channel 254 is alos connected to video synchronization circuit 130 for storing information for control purposes therein. Channel 254 is connected to mulitiplexer 256 (which is a 74LS157) within video memory circuit 152 and to multiplexer 259 (which is a 74LS157). The output of shift register 145 is stored into video memory 154 to form a digital representation of the image observed by camera or at least a portion of the image within a window set by the CPU. The CPU can set through line 266 connected to control buffer 170 the necessary control to allow it to store the output of shift register 145 into video memory 154. However, in normal operation the sequencer 250, which is a microcontroller combined with peripheral logic circuits, performs the task of storing the output of shift register 145 into video memory 154 through line 269 which is connected to one input of AND gate 272 and to the control input of multiplexer 256. With an appropriate signal on line 269, when video synchronization circuit 130 indicates on line 275 that shift register 145 is full and prepared to transfer information buffer 170 is connected to receive the output of register 145.

Sequencer 250 is adapted to provide a number of control signals to various other elements within the system of Figure 2. The sequencer receives instructions from the CPU 205 through channel 246 and CRU 228. The sequencer provides the necessary control signals to address counter 280 through multiline channel 285. These signals would include a clock signal indicating that the counter should increment. The function of buffer 173 is controlled by line 290 connected to sequencer 250. The side of buffer 173 away from its connection to channel 160 is connected to reference memory 295 and a latch 300 (which is an 74LS273). The latch function of latch 300 is controlled by sequencer 250 through line 305. The sequencer 250 receives inputs from lines 312 and 313 connected to search area unit 316 within video memory circuit 152 and to comparitor 320 within correlator 195. In addition, sequencer 250 has outputs connected through lines 324, 326, and 328 to registers 185 and 187, to accumulator 332 within correlator 195, and to registers 235 and 243, respectively. Sequencer 250 also supplies a carry bit through line 335 to adder 338 within video memory circuit 152.

The output of address counter 280 is connected through multiline channel 345 as an input to multiplexer 259 and adder 338. The output of latch 300 is connected through multiline channel 350 as an input to a parallel exclusive OR circuit 353 within correlator 195.

The search area unit 316 is connected to channel 160 to receive data from the CPU for storage into registers 360—363. The registers 360—363 contain the X and Y coordinates for the search within the representation stored in video memory 154. The coordinates contain the address of the first X and the first Y memory location to be transferred from video memory 154 through channel 254 to registers 185 and 187. These registers also contain the coordinates of the last memory location to be transferred. When the last part of the representation has been transferred to registers 185 and 187, the search area unit so indicates to sequencer 250 through line 312. The search area unit 316 is connected through multiline channel 370 to adder 338 and to register 243. The search area unit 316 supplies the base coordinates to adder 338, which are combined with the address from address counter 280 to produce the appropriate address within video memory 154. The output of adder 338 is connected through multiline channel 375 as an input to multiplexer 256. When selected by sequencer 250 the address produced by adder 338 is connected to the addressing inputs of video memory 154 through multiplexer 256. The output of multiplexer 256 is connected to the address inputs of video memory 154 through multiline channel 380. The data lines of video memory 154 are connected through multiline channel 385 to the side of buffer 170 away from its connection to channel 160.

The addressing inputs of reference memory 295 are connected through multiline channel 390 to the output of mulitiplexer 259. The data lines of reference memory 295 are connected through multiline channel 395 to the side of buffer 173 away from its connection to channel 160 and as an input to latch 300. The output of search area unit 216 connected to multiline channel 400 is connected to the barrel shifter 405 within correlator 195 as an input.

The barrel shifter 405 is connected through multichannel 410 to registers 185 and 187. The output of barrel shifter 405 is connected through multiline channel 415 to exclusive OR circuit 353. The output of exclusive OR circuit 353 is connected to counter 420 through multiline channel 425. The output of counter 420 is connected through multiline channel 430 to accumulator 332. A multiline channel 435 connects the output of accumulator 332 to comparitor 320 and to register 235.

In operation, the operator initiated a setup procedure which defines the predetermined pattern. A scan of the object is stored into the video memory under the control of computer 140. The operator then positions a cursor on a monitor (not shown) and defines the predetermined pattern and supplies the size of the predetermined pattern. If more than one predetermined pattern is to be utilized, then the additional pattern is defined by the operator. The computer then stores the predetermined pattern or patterns into reference memory 295. The pattern location system is now ready to locate the predetermined pattern located on an object presented to the camera. When the object is mechanically positioned, the video synchronization circuit is initiated and a scan of the object is stored into the video memory 154. The computer loads the search area coordinates into registers 360—363. The sequencer 250 is informed by the computer of the size of the predetermined pattern stores in reference memory 295. The location of the predetermined pattern then begins. The initial part of the search area is loaded into registers 185 and 187 utilizing the address supplied by the adder 338. The search area unit provides the shifting information to barrel shifter 405. The output of the shifter 405 is compared with the initial part of the predetermined pattern latched into latch 300 by exclusive OR gate 353. The address supplied by the address counter 280 is ulilized to address the reference memory 295 for latching into latch 300. The number of mismatches is located by exclusive OR gate 353 and is counted by counter 420 as the represenation in video memory 154 representing a row or column of video. After completing the row or column, the total of the mismatches is summed into accumulator 332. After every row or column is examined, the output of the accumulator is compared with the contents of register 235. If the contents of register 235 is greater than the contents of accumulator, the contents of accumulator 332 is loaded into register 235 and the address of that location within video memory 154 is loaded into register 243. The operation continues until the best match is located. The computer than accesses the registers 243 and 232 to determine if the result meets certain preselected criterion.

If the location is determined to be valid, the computer can specify a refined search in which the search area unit has starting coordinates closer to the location in register 243 and a smaller bit shift address output to barrel shifter 405.

As shown in Figure 3, a logic diagram describes a portion of the operation of the computer 140 if it is desired to locate two predetermined patterns. This operation begins in logic step 450 and exits step 450 to enter logic state 452. In state 452 the location of the first predetermined pattern is detected if possible. If the location is not found then the logic enters logic step 454. In step 454 the search area is enlarged. The logic then reenters state 452 and another attempt to locate the first predetermined pattern is made. If the pattern is found, the logic exits state 453 and enters state 456. In state 455, the location of the second predetermined pattern is detected if possible. If the location is not found then the logic enters logic step 458 where the search area is enlarged. The logic then reenters states 456. If the second predetermined pattern is found the logic exits state 456 and enters step 460. In step 460 the computer calculates the differences between the actual location of the predetermined patterns and the desired location. This information is supplied to the displacement control discussed above. That information includes the X and Y displacement and any angular displacement. The logic then exits step 460 and enters step 462 which ends this procedure.

In Figure 4, a logic step 470 begins a procedure of the computer. The logic exits step 470 and enters logic state 472. In state 472 the computer determined if the predetermined pattern was located within the initial search area. If the predetermined pattern was not located within the inital search area, the logic exits state 472 and enters step 474.

In step 474, the search is enlarged to another selected area from a plurality of selectable areas for the next object presented to camera 20 (Figure 1). The logic then exits step 474 and enters step 476 wherein the computer continues with other procedures. If while the logic is in state 472 the pattern was located within the initial search area, the logic exits state 472 and enters step 478. In step 478 the search area is reduced to another selected area selected from a plurality of selectable search areas. The logic then enters step 476.

Having described the invention in connection with certain specific embodiments thereof, it is to be understood that further modifications may now suggest themselves to those skilled in the art, it is intended to cover all such modifications as fall within the scope of the appended claims.

## Claims

1. Apparatus for moving a tool relative to a workpiece (22) to each of an array of datum positions in turn by executaing a nominal movement from one datum position to the next,

in which the workpiece (22) has on its surface repetitions of a particular pattern at places corresponding to the array of datum positions, and the apparatus includes alignment means having means (20) for producing an image of the part of the surface within a field of view relative to the tool, means ((353, 420) for comparing a selected part of that image with a reference image representing the particular pattern, search means (316) for shifting the selected part of the image over the field of view to obtain the best match between the selected image part and the reference image, and adjusting means (26, 27) responsive to the search means to bring the tool accurately to a required position on the workpiece, characterised in that

the search means is arranged to shift the selected part of the image over a preselected search area of the field of view, the size of the preselected search area being increased if a previous search was unsuccessful in finding a satisfactory match between the selected image part and the reference image, and the size of the preselected search area being reduced if a previous search was successful in finding a satisfactory match (Figure 4).

2. Apparatus according to claim 1 characterised in that each preselected search area in the video memory corresponds to a rectangular area on the surface of the workpiece.

3. Apparatus according to claim 1 or 2 characterised in that the means for producing an image and the comparing means include:

a video camera (20) for repeatedly scanning a surface of the workpiece (22) within the field of view to produce an analogue signal,

means (37) for selecting the part of the analoque signal which corresponds to the selected part of the image,

means (48, 52) for integrating the selected part of the analogue signal during a single scan of the surface of the workpiece to produce an integrated signal,

means (56) for normalising the integrated signal by dividing it by a factor corresponding to the size of the area of the selected part to produce a normalised output,

means (90) for storing the normalised output of the the normalising means for a scan period subsequent to the said single scan, and

digitising means (40) responsive to the normalised output stored in the storing means for converting the analogue signal from the video camera during the subsequent scan period into the digital representation of an image for storage in the video memory.

4. Apparatus according to claim 3 characterised in that the workpiece is mounted on a table (24) movable relative to the video camera and means (22, 27) are provided responsive to the search means to move the table to a predetermined position relative to the video camera.

5. Apparatus according to claim 4 characterised in that means is provided for rotating the workpiece in response to the locations of the best matches found of two occurrences of the particular pattern to the reference image.

6. Apparatus for processing a semiconductor body in the manufacture of an integrated circuit including apparatus according to any one of claims 1 to 5.

**Patentansprüche**

1. Vorrichtung zum Bewegen eines Werkzeugs relativ zu einem Werkstück (22) der Reihe nach zu jeder Bezugsposition einer Gruppe von Bezugspositionen durch Ausführen einer Nennbewegung von einer Bezugsposition zur nächsten, wobei das Werkstück (22) an seiner Oberfläche Wiederholungen eines bestimmten Musters an Stellen aufweist, die der Gruppe der Bezugspositionen entsprechen, wobei die Vorrichtung Ausrichtmittel mit Mitteln (20) zum Erzeugen eines Bildes des Teils der Oberfläche innerhalb eines Gesichtsfeldes relativ zu dem Werkzeug enthält, Mittel (353, 420) zum Vergleichen eines ausgewählten Teils des Bildes mit einem das bestimmte Muster repräsentierenden Bezugsbild enthält, Suchmittel (360) zu Verschieben des ausgewählten Teils des Bildes über das Gesichtsfeld zu Erzielung einer bestmöglichen Übereinstimmung zwischen dem ausgewählten Bildteil und dem Bezugsbild enthält, und ferner Einstellmittel (26, 27) enthält, die abhängig von den Suchmitteln das Werkzeug exakt in eine gewünschte Position auf dem Werkstück bringen, dadurch gekennzeichnet, daß die Schumittel so angeordnet, sind, daß sie den ausgewählten Teil des Bildes über einen vorgewälten Suchbereich des Gesichtsfeldes verschieben, wobei die Größe des vorgewählten Suchbereichs vergrößert wird, wenn ein vorhergehender Suchvorgang beim Auffinden einer zufriedenstellenden Übereinstimmung zwischen dem ausgewählten Bildteil und dem Bezugsbild erfolglos war, während die Größe des vorgewählten Suchbereichs verkleinert wird, wenn ein vorangehender Suchvorgang beim Auffinden einer zufriedenstellenden Übereinstimmung erfolgreich war (Fig. 4).

2. Vorrichtung nach Anspruch 1, dadurch gekennzeichnet, daß jeder vorgewählte Suchbereich über einem Videospeicher einer rechtwinkligen Fläche auf der Oberfläche des Werkstücks entspricht.

3. Vorrichtung nach Anspruch 1 oder 2, dadurch gekennzeichnet, daß die Mittel zum Erzeugen eines Bildes und die Vergleichsmittel folgendes enthalten:

eine Videokamera (20) zum wiederholten Abtasten der Oberfläche des Werkstücks (22) innerhalb des Gesichtsfeldes zur Erzeugung eines Analogsignals,

Mittel (37) zum Auswählen des Teils des Analogsignals, der dem ausgewählten Teil des Bildes entspricht,

Mittel (48, 52) zum Integrieren des ausgewählten Teils des Analogsignals während eines einzigen Abtastvorgangs der Oberfläche des Werkstücks zu Erzeugung eines integrierten Signals,

Mittel (56) zum Normieren des integrierten Signals durch Dividieren um einen Faktor, der der Größe der Fläche des ausgewählten Teils entspricht, damit ein normiertes Ausgangssignal erzeugt wird,

Mittel (90) zum Speichern des normierten Ausgangssignals der Normierungsmittel für die Dauer einer Abtastperiode im Anschluß an den einzelnen Abtastvorgang und

Digitalisierungsmittel (40), die abhängig von dem in den Speichermitteln gespeicherten normierten Ausgangssignal das analoge Signal aus der Videokamera während der nachfolgenden Abtastperiode in eine digitale Darstellung eines Bildes zum Abspeichern in den videospeicher umsetzen.

4. Vorrichtung nach Anspruch 3, dadurch gekennzeichnet, daß das Werkstück auf einem Tisch (24) befestigt ist, der relativ zu der Videokamera beweglich ist, und daß Mittel (22, 27) vorgesehen sind, die abhängig von den Suchmitteln den Tisch zu einer vorgestimmten Position relativ zu der Videokamera bewegen.

5. Vorrichtung nach Anspruch 4, dadurch gekennzeichnet, daß Mittel vorgesehen sind, die das Werkstück in Abhängigkeit von den Orten der besten Übereinstimmungen drehen, die für ein zweimaliges Auftreten des Bestimmten Musters des Bezugsbildes aufgefunden worden sind.

6. Vorrichtung zum Verarbeiten eines Halbleiterkörpers bei der Herstellung einer integrierten Schaltung mit einer Vorrichtung nach einem der Ansprüche 1 bis 5.

**Revendications**

1. Appareil pour déplacer un outil par rapport à une pièce à travailler (22) en l'emenant successivement en chacune des positions d'une série de positions de référence par exécution d'une mouvement nominal d'une position de référence à la suivante,

dans lequel la pièce à travailler (22) porte à sa surface des répétitions d'une forme particulière en des endroits correspondant à la série de positions de référence, et l'appareil comporte des moyens d'alignement comportant des moyens (20) de formation d'une image de la partie de la surface comprise dans un champ de visée par rapport à l'outil, des moyens (353, 420) de comparaison d'une partie sélectionnée de cette image à une image de référence représentant la forme particulière, un moyen de recherche (316) propre à faire balayer le champ de visée à la partie sélectionnée de l'image pour obtenir la meilleure concordance entre la partie sélectionnée de l'image et l'image de référence, et des moyens de réglage (26, 27) sensibles au moyen de recherche pour amener exactement l'outil en une position voulue sur la pièce à travailler, caractérisé en ce que

le moyen de recherche est agencé de manière à faire balayer à la partie sélectionnée de l'image une zone de recherche présélectionnée du champ de visée, la taille de la zone de recherche présélectionnée étant augmentée si une recherche précédente n'a pas réussi à trouver une concordance satisfaisante entre le partie sélectionnée de l'image et l'image de référence, et la taille de la zone de recherche présélectionnée étant réduite si une recherche précédente a réussi à trouver une concordance satisfaisante (Figure 4).

2. Appareil selon la revendication 1, caractérisé en ce que chaque zone de recherche présélectionnée dans la mémoire vidéo correspond à une zone rectangulaire sur la surface de la pièce à travailler.

3. Appareil selon la revendication 1 ou 2, caractérisé en ce que les moyens de formation d'une image et les moyens de comparaison comprennent:

une caméra vidéo (20) propre à balayer répétitivement une surface de la pièce à travailler (22) dans le champ de visée pour fournir un signal analogique,

des moyens (37) de sélection de la partie du signal analogique qui correspond à la partie sélectionnée de l'image,

des moyens (48, 52) d'intégration de la partie sélectionnée du signal analogique pendant un balayage individuel de la surface de la pièce à travailler pour fournir un signal intégré,

des moyens (56) de normalisation du signal intégré par division de celui-ci par un facteur correspondant à la taille de l'aire de la partie sélectionnée pour fournir une sortie normalisée,

des moyens (90) de mémorisation de la sortie normalisée des moyens de normalisation pour une période de balayage subséquente audit balayage individuel, et

des moyens de numérisation (40) sensibles à la sortie normalisée mémorisée dans les moyens de mémorisation pour convertir le signal analogique provenant de la caméra vidéo pendant la période de balayage subséquente en la représentation numérique d'une image pour mémorisation dans la mémoire vidéo.

4. Appareil selon la revendication 3, caractérisé en ce que la pièce à travailler est montée sur une table (24) mobile par rapport à la caméra vidéo et en ce qu'il est prévu des moyens (22, 27) sensibles au moyen de recherche pour amener la table en une position prédéterminée par rapport à la caméra vidéo.

5. Appareil selon la revendication 4, caractérisé en ce qu'il est prévu un moyen pour faire pivoter la pièce à travailler en répose aux localisations des meilleures concordances trouvées de deux occurrences de la forme particulière par rapport à l'image de référence.

6. Appareil de traitement d'une pièce de semiconducteur dans la fabrication d'un circuit intégré comprenant un appareil selon l'une quelconque des revendications 1 à 5.

EP 0 113 556 B1

Fig. 1

Fig. 2

Fig. 3

Fig. 4

3